# DEMANDE DE BREVET EUROPEEN

(11) **EP 3 696 697 A1**
(43) Date de publication de la demande: **19.08.2020**
(21) Numéro de dépôt: 20169414.8
(22) Date de dépôt: 20.10.2015
(51) Int. Cl.: G06F 21/44, H04L 29/06, G06F 21/73, H04L 9/32, H04W 12/00, H04W 12/06

(54) **PROCÉDÉ D'AUTHENTIFICATION D'UN OBJET PAR UN DISPOSITIF CAPABLES DE COMMUNIQUER MUTUELLEMENT SANS CONTACT, SYSTÈME ET OBJET CORRESPONDANTS**

(30) Priorité: 03.02.2015 FR 1550827
(62) Demande divisionnaire de: 15190538.7
(71) Demandeur: STMicroelectronics (Rousset) SAS, 13790 Rousset (FR)
(72) Inventeur: WUIDART, Sylvie, 83910 POURRIÈRES (FR)
(74) Mandataire: Casalonga

(57) **Abrégé**

L'objet stocke une signature (SGN) qui lui est associée. Le procédé comprend une élaboration (S23) dans ledit objet d'au moins une information de personnalisation (SGNM) de l'objet au moins à partir de ladite signature stockée (SGN) et d'au moins une indication (RD) associée audit objet et communiquée sans contact (S22) par le dispositif audit objet lors de l'authentification, une communication sans contact (S24) audit dispositif de ladite au moins une information de personnalisation (SGNM), au moins une détermination (S25) par le dispositif de ladite signature (SG) à partir de ladite au moins une information de personnalisation (SGNM) et de ladite au moins une indication (RD), et au moins une vérification (S26) de ladite signature (SGN) par le dispositif.

## Description

Des modes de mise en œuvre et de réalisation de l'invention concernent la transmission sans contact entre un lecteur, par exemple un téléphone mobile cellulaire émulé en mode lecteur, et un objet, par exemple un transpondeur ou étiquette, et plus particulièrement l'authentification de l'objet par le lecteur.

La communication sans contact ou sans fil s'effectue entre un lecteur et un objet, par exemple un transpondeur du type étiquette (« tag » en langue anglaise), une carte à puce sans contact ou encore un téléphone mobile émulé en mode carte sans que ces exemples ne soient limitatifs.

Le lecteur peut être un lecteur dédié, mais par exemple une borne, mais également par exemple un téléphone mobile émulé en mode lecteur sans que ces exemples ne soient limitatifs.

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact, des transpondeurs ou des téléphones mobiles émulés en mode carte, et des lecteurs.

La technologie NFC est particulièrement adaptée pour connecter tout type de dispositif utilisateur et permet des communications rapides et faciles.

Un objet sans contact est un objet capable d'échanger des informations via une antenne avec un autre objet sans contact, par exemple un lecteur, selon un protocole de communication sans contact.

Un objet NFC, qui est un objet sans contact, est un objet compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Lors d'une transmission d'information entre un lecteur et un objet émulé en mode étiquette ou carte, le lecteur génère un champ magnétique par l'intermédiaire de son antenne qui est généralement dans les normes classiquement utilisées, une onde à une fréquence de 13,56MHz.

De l'autre côté, l'antenne de l'objet émulant l'étiquette module le champ généré par le lecteur.

Cette modulation est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet. Et, de cette façon, les informations à transmettre depuis l'objet vers le lecteur sont transmises par modulation de charge au courant d'antenne du lecteur.

Les objets, tels que par exemple des transpondeurs sans contact sont utilisés dans de nombreuses applications comme par exemple la billetterie mobile dans les transports publics ou encore le suivi de produits dans des applications de transport (suivi de bagages par exemple) ou bien encore dans le domaine de la finance (paiement sans contact) ou encore dans le domaine des contrôles d'accès à des bâtiments.

Il est important, au moins pour certaines applications considérées comme particulièrement sensibles, que l'objet puisse être authentifié de façon à éviter autant que possible l'utilisation d'objets clonés réalisés par des tiers mal intentionnés.

La demande de brevet européen n° 2 677 473 décrit un procédé d'authentification d'une étiquette ou transpondeur. Ce procédé prévoit la génération d'une signature stockée dans une mémoire du transpondeur, cette signature étant obtenue en utilisant la clé privée d'un algorithme de chiffrement/déchiffrement asymétrique, par exemple l'algorithme RSA.

Pour procéder à l'authentification, la signature et l'identifiant du transpondeur sont communiqués au dispositif qui déchiffre la signature à l'aide la clé publique de l'algorithme de déchiffrement asymétrique, de façon à obtenir l'identifiant du transpondeur qui est vérifié avec l'identifiant communiqué.

Un tel procédé présente néanmoins une vulnérabilité vis-à-vis d'un tiers mal intentionné.

En effet, la clé publique, l'identifiant du transpondeur ainsi que la signature sont des données publiques accessibles en clair. En conséquence, un tiers mal intentionné peut incorporer dans une mémoire classique équipée d'une interface NFC l'identifiant du transpondeur ainsi que la signature et dupliquer cette mémoire un très grand nombre de fois pour obtenir un très grand nombre de transpondeurs clonés.

On ne s'apercevra alors que ces transpondeurs ne sont pas des transpondeurs originaux que si par exemple plusieurs transpondeurs ayant le même identifiant communiquent avec des téléphones mobiles cellulaires en des emplacements géographiques différents. La seule solution pour détecter ce clonage consiste alors en la détection par une entité de contrôle ou de supervision de la présence d'un très grand nombre de transpondeurs ayant le même identifiant et l'établissement alors de listes d'identifiants à bloquer.

Selon un mode de mise en œuvre et de réalisation, il est proposé une authentification plus robuste et moins vulnérable d'un objet, par exemple un transpondeur, capable de communiquer sans contact avec un dispositif qui agit en tant que dispositif authentificateur.

Selon un mode de mise en œuvre et de réalisation, il est proposé d'effectuer une telle authentification moins vulnérable à moindre coût tout en rendant impossible la fabrication par un tiers mal intentionné d'objets clonés en utilisant une simple mémoire.

Selon un aspect, il est proposé un procédé d'authentification d'un objet par un dispositif, ledit objet stockant une signature associée audit objet, le procédé comprenant
une élaboration dans ledit objet d'au moins une information de personnalisation de l'objet au moins à partir de ladite signature stockée et d'au moins une indication associée audit objet et communiquée sans contact par le dispositif audit objet lors de l'authentification,
une communication sans contact audit dispositif de ladite au moins une information de personnalisation,
au moins une détermination par le dispositif de ladite signature à partir de ladite au moins une information de personnalisation et de ladite au moins une indication, et
au moins une vérification de ladite signature par le dispositif.

Ainsi, selon cet aspect, lors de l'authentification on effectue, à l'initiative du dispositif et dans ledit objet, au moins une personnalisation (« customization » en langue anglaise) de la signature stockée dans ledit objet, ladite au moins une signature personnalisée étant ensuite transmise au dispositif, ce qui permet au dispositif, qui a connaissance de cette ou de ces personnalisations, d'en extraire la signature puis d'effectuer au moins une fois la vérification de cette signature.

Ceci rend donc impossible l'utilisation d'une simple mémoire par un tiers mal intentionné pour cloner l'objet et obligerait ce tiers mal intentionné à prévoir un circuit électronique spécifique comportant par exemple un composant FPGA ou un microcontrôleur, pour cloner l'objet ce qui serait alors économiquement non intéressant pour le tiers mal intentionné.

De façon à rendre encore plus sûre la personnalisation de l'objet, ladite au moins une indication est avantageusement générée par le dispositif lors de l'authentification.

Par ailleurs, la génération de cette indication comprend avantageusement une génération d'un aléa, par exemple un nombre pseudo-aléatoire ou aléatoire. Ceci rend encore plus robuste l'authentification et permet en particulier à un dispositif de pouvoir authentifier éventuellement plusieurs fois un même objet avec des personnalisations différentes à chaque demande d'authentification.

Une façon de rendre encore plus robuste l'authentification est d'y d'insérer une redondance dans la personnalisation de la signature stockée.

Une telle redondance peut par exemple être obtenue en utilisant plusieurs (au moins deux) indications différentes associées à l'objet ce qui va conduire à l'élaboration de plusieurs (au moins deux) informations de personnalisation.

Et à titre d'exemple non limitatif, l'utilisation d'un aléa comme indication est particulièrement bien adapté pour la génération d'indications différentes, car deux aléas générés successivement présentent une très forte probabilité d'être différents.

Ainsi selon un mode de mise en œuvre, le procédé comprend
une élaboration dans ledit objet de plusieurs informations de personnalisation de l'objet à partir de ladite signature stockée et de plusieurs indications différentes associées audit objet et communiquées sans contact par le dispositif audit objet lors de l'authentification,
une communication sans contact audit dispositif desdites plusieurs informations de personnalisation, et
plusieurs déterminations par le dispositif de ladite signature à partir respectivement desdites plusieurs informations de personnalisation et desdites indications correspondantes.

A ce stade plusieurs solutions existent pour terminer l'authentification, qui pourront être choisies en fonction de l'application envisagée et/ou de la puissance de calcul disponible dans le dispositif.

Ainsi selon une première variante, ladite au moins une vérification de ladite signature par le dispositif comprend une pré-vérification de l'égalité desdites signatures déterminées, et en cas d'égalité, une vérification de l'une des signatures déterminées.

Si l'étape de vérification conduit à une inégalité, l'objet peut alors être déclaré non authentifié sans qu'il soit nécessaire de vérifier la signature.

Selon une autre variante possible ladite au moins une vérification de ladite signature par le dispositif comprend une vérification de chacune des signatures déterminées.

Et dans ce cas l'objet pourra être déclaré authentifié si toutes ces vérifications de la signature ont été positives.

Selon un mode de mise en œuvre, l'élaboration de ladite au moins une information de personnalisation comprend au moins un masquage de la signature à l'aide d'un opérateur de masquage utilisant ladite au moins une indication, et ladite au moins une détermination par le dispositif de ladite signature comprend au moins un démasquage de ladite au moins une signature masquée, à l'aide de l'opérateur de démasquage associé audit opérateur de masquage et de ladite au moins une indication.

La notion de masquage est ici une notion très large qui peut incorporer aussi bien un chiffrement par un algorithme de chiffrement, par exemple du type DES ou AES, que de façon beaucoup plus simple et beaucoup plus économique, un opérateur de brouillage («scramble » en langue anglaise) ou encore beaucoup plus simplement un opérateur logique du type OU EXCLUSIF.

Selon un mode de mise en œuvre, la signature stockée résulte d'un chiffrement d'au moins un identifiant-objet de l'objet avec une clé privée d'un algorithme de chiffrement/déchiffrement asymétrique, et ladite au moins une vérification de ladite signature comprend un déchiffrement par le dispositif dudit au moins un identifiant-objet chiffré, à l'aide de la clé publique dudit algorithme de chiffrement/déchiffrement et une comparaison du résultat du déchiffrement avec ledit au moins un identifiant-objet ayant été communiqué au dispositif par ledit objet.

Selon un mode de mise en œuvre, la génération de la paire de clés publique et privée, la mise à disposition de la clé publique au dispositif, l'élaboration de ladite signature et son stockage dans ledit objet sont effectués dans une entité tierce, par exemple mais non limitativement, lors de la fabrication de l'objet.

En variante, il est également possible que la signature comprenne un chiffrement non seulement dudit identifiant-objet mais également d'un identifiant-dispositif associé au dispositif, avec la clé privée de l'algorithme de chiffrement/déchiffrement asymétrique.

Dans ce cas, ladite au moins une vérification de ladite signature comprend le déchiffrement par le dispositif de l'identifiant-objet et de l'identifiant-dispositif encryptés à l'aide de la clé publique et une comparaison du résultat du chiffrement avec non seulement l'identifiant-objet qui a été communiqué sans contact au dispositif par ledit objet, mais aussi avec l'identifiant-dispositif.

L'objet est par exemple un objet NFC et le dispositif peut être un dispositif comprenant au moins une fonctionnalité NFC, par exemple un téléphone mobile cellulaire équipé d'une fonctionnalité NFC.

Les échanges entre l'objet et le dispositif pour l'élaboration de l'information de personnalisation et sa communication sont avantageusement effectués par des messages ayant un format conforme à la spécification NFC Data Exchange Format-NDEF.

De façon à ne pas élaborer des commandes spécifiques, la communication sans contact de ladite au moins une indication par le dispositif audit objet et la communication sans contact de ladite au moins une information de personnalisation par l'objet au dispositif comprennent des commandes d'écriture et de lecture de l'identifiant-objet dans lesquelles les contenus des champs dédiés à l'identifiant objet sont modifiés pour contenir ladite au moins une indication ou ladite au moins une information de personnalisation.

Par ailleurs, la prise en compte de ces modifications par l'objet est conditionnée à une valeur choisie d'un paramètre, valeur qui est fixée par le dispositif.

Selon un autre aspect, il est proposé un système, comprenant un objet et un dispositif capables de dialoguer mutuellement sans contact, ledit objet comportant des moyens de mémoire configurés pour stocker une signature associée audit objet et des moyens de traitement-objet configurés pour effectuer à l'initiative du dispositif, au moins une personnalisation de la signature stockée, et pour communiquer au dispositif ladite au moins une signature personnalisée, le dispositif comportant des moyens de traitement-dispositif configurés pour extraire la signature de cette ou de ces signatures personnalisées et effectuer au moins une fois la vérification de cette signature.

Selon un mode de réalisation les moyens de traitement-dispositif sont configurés pour communiquer audit objet au moins une indication associée audit objet lors d'une authentification de l'objet par le dispositif, les moyens de traitement-objet sont configurés pour élaborer au moins une information de personnalisation de l'objet au moins à partir de ladite signature stockée et de ladite au moins une indication et délivrer ladite au moins une information de personnalisation audit dispositif, les moyens de traitement-dispositif étant en outre configurés pour effectuer au moins une détermination de ladite signature à partir de ladite au moins une information de personnalisation et de ladite au moins une indication et effectuer au moins une vérification de ladite signature.

Selon un mode de réalisation, les moyens de traitement-dispositif comprennent un générateur configuré pour générer ladite au moins une indication lors de l'authentification.

Le générateur peut comprendre un générateur de nombres pseudo-aléatoires ou aléatoires, ladite au moins une indication comportant un nombre pseudo-aléatoire ou aléatoire.

Selon un mode de réalisation les moyens de traitement-dispositif sont configurés pour communiquer audit objet plusieurs indications différentes associées audit objet lors d'une authentification de l'objet par le dispositif, les moyens de traitement-objet sont configurés pour élaborer plusieurs informations de personnalisation de l'objet à partir de ladite signature stockée et desdites plusieurs indications différentes et délivrer ces informations de personnalisation audit dispositif, les moyens de traitement-dispositif étant en outre configurés pour effectuer plusieurs déterminations de ladite signature (SGN) à partir respectivement desdites plusieurs informations de personnalisation et desdites indications correspondantes.

Selon une variante les moyens de traitement-dispositif sont configurés pour effectuer une pré-vérification de l'égalité desdites signatures déterminées, et en cas d'égalité, une vérification de l'une des signatures déterminées.

Selon une autre variante les moyens de traitement-dispositif sont configurés pour effectuer une vérification de chacune des signatures déterminées.

Selon un mode de réalisation, les moyens de traitement-objet comprennent un opérateur de masquage configuré pour effectuer au moins un masquage de ladite signature en utilisant ladite indication de façon à élaborer ladite au moins une information de personnalisation et les moyens de traitement-dispositif comprennent un opérateur de démasquage associé audit opérateur de masquage configuré pour effectuer au moins un démasquage de ladite au moins une signature masquée, à l'aide de ladite au moins une indication de façon à effectuer au moins une détermination de ladite signature.

Selon un mode de réalisation, ladite signature stockée résulte d'un chiffrement d'au moins un identifiant-objet de l'objet avec une clé privée d'un algorithme de chiffrement/déchiffrement asymétrique, les moyens de traitement-objet sont configurés pour communiquer au dispositif ledit au moins un identifiant-objet et les moyens de traitement-dispositif comprennent des moyens de vérification de ladite signature comportant ledit algorithme de chiffrement/déchiffrement apte à effectuer un déchiffrement dudit au moins un identifiant-objet chiffré, à l'aide de ladite clé publique et des moyens de comparaison, aptes à effectuer une comparaison du résultat du déchiffrement avec ledit au moins un identifiant-objet ayant été communiqué au dispositif par ledit objet.

Selon un mode de réalisation, le système comprend en outre une entité tierce apte à générer la paire de clés publique et privée, mettre la clé publique à disposition du dispositif, élaborer ladite signature et la stocker dans ledit objet.

Selon un mode de réalisation, l'entité tierce est configurée pour élaborer ladite signature par un chiffrement dudit identifiant-objet et d'un identifiant-dispositif associé au dispositif avec la clé privée de l'algorithme de chiffrement/déchiffrement asymétrique, et l'algorithme de chiffrement/déchiffrement des moyens de vérification sont aptes à déchiffrer ledit identifiant-objet et ledit identifiant-dispositif chiffrés, à l'aide de la clé publique et les moyens de comparaison sont aptes à effectuer une comparaison du résultat du déchiffrement avec ledit identifiant-dispositif et avec ledit identifiant-objet ayant été communiqué au dispositif par ledit objet.

Selon un mode de réalisation, les moyens de mémoire de l'objet sont en outre configurés pour stocker un paramètre, les moyens de traitement-dispositif sont configurés pour élaborer des commandes d'écriture et de lecture de l'identifiant-objet dans lesquelles les contenus des champs dédiés à l'identifiant-objet sont modifiés pour contenir ladite au moins une indication ou ladite au moins une information de personnalisation, et pour fixer la valeur dudit paramètre à une valeur choisie, et les moyens de traitement-objet sont configurés pour prendre en compte les modifications des contenus desdits champs lorsque la valeur dudit paramètre a la valeur choisie.

Selon un autre aspect, il est également proposé un dispositif appartenant au système tel que défini ci-avant.

Selon encore un autre aspect, il est proposé un objet appartenant au système tel que défini ci-avant.

Selon encore un autre aspect, il est proposé un objet capable de dialoguer sans contact avec un dispositif, comprenant des moyens de mémoire configurés pour stocker une signature associée audit objet, des moyens de traitement-objet configurés pour élaborer au moins une information de personnalisation de l'objet au moins à partir de ladite signature stockée et d'au moins une indication associée audit objet communiquée par le dispositif audit objet lors d'une authentification de l'objet par le dispositif, et délivrer ladite au moins une information de personnalisation au dispositif.

Selon un mode de réalisation, les moyens de traitement-objet comprennent un opérateur de masquage configuré pour effectuer au moins un masquage de ladite signature en utilisant ladite au moins une indication de façon à élaborer ladite au moins une information de personnalisation.

Selon un mode de réalisation, ladite signature stockée résulte d'un chiffrement d'au moins un identifiant-objet de l'objet avec une clé privée d'un algorithme de chiffrement/déchiffrement asymétrique, et les moyens de traitement-objet sont configurés pour communiquer au dispositif ledit au moins un identifiant-objet.

L'objet peut être un transpondeur ou encore plus généralement un objet NFC.

Selon un mode de réalisation, l'objet est configuré pour échanger des messages ayant un format conforme à la spécification NFC Data Exchange Format-NDEF lors de l'élaboration de ladite information de personnalisation et de sa communication.

Selon un mode de réalisation, les moyens de mémoire de l'objet sont en outre configurés pour stocker un paramètre, les moyens de traitement-objets sont configurés pour recevoir des commandes d'écriture et de lecture de l'identifiant-objet dans lesquelles les contenus des champs dédiés à l'identifiant-objet sont modifiés pour contenir ladite au moins une indication ou ladite au moins une information de personnalisation, et pour prendre en compte les modifications des contenus desdits champs lorsque la valeur dudit paramètre a une valeur choisie.

D'autres avantages et caractéristiques de l'invention apparaîtront à l'examen de la description détaillée de modes de mise en œuvre et de réalisation, nullement limitatifs, et des dessins annexés sur lesquels :

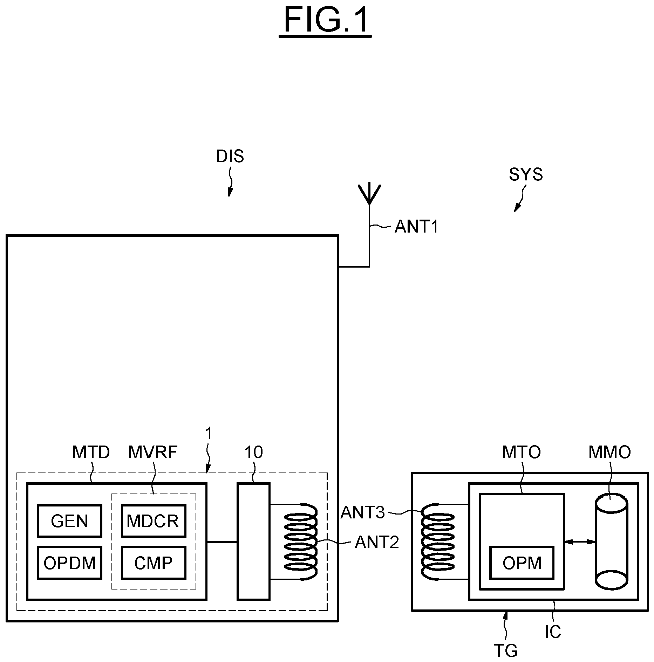

- les figures 1 à 13 illustrent schématiquement différents modes de mise en œuvre et de réalisation de l'invention.

Sur la figure 1, la référence SYS désigne un système comportant un dispositif DIS, par exemple un téléphone mobile cellulaire, et un objet TG, par exemple un transpondeur.

Le dispositif DIS, par exemple un téléphone mobile cellulaire, est équipé d'une antenne ANT1 pour l'établissement des communications téléphoniques.

Le dispositif DIS comporte par ailleurs un bloc 1 ayant une fonctionnalité NFC et comportant une antenne ANT2, par exemple une antenne inductive, utilisable pour la communication sans contact avec le transpondeur TG.

Le bloc 1 comporte également un dispositif d'émission/réception 10 ou tête d'émission/réception, de structure classique qui comporte notamment des moyens de modulation/démodulation de trames, un contrôleur de trames destiné notamment à calculer des bits de parité selon une fonction logique prédéfinie, par exemple celle définie dans la norme ISO 14443.

La tête d'émission/réception 10 est connectée par un bus à un microcontrôleur hôte, par exemple un microcontrôleur NFC comportant par exemple une unité centrale classique associée à différentes mémoires.

Le microcontrôleur incorpore des moyens de traitement-dispositif MTD comportant notamment un générateur GEN de nombres pseudo-aléatoires, un opérateur de démasquage OPDM, et des moyens de vérification de signature MVRF incluant notamment des moyens de déchiffrement MDCR et un comparateur CMP.

On reviendra plus en détail ci-après sur la fonctionnalité de ces différents moyens.

L'objet ou transpondeur TG comporte quant à lui une antenne ANT3 destinée à être en couplage magnétique avec l'antenne ANT2 pour la communication sans contact.

Cette antenne ANT3 est connectée à un circuit intégré IC comportant notamment des moyens de traitement-objet MTO ainsi que des moyens de mémoire MMO.

Les moyens de traitement-objet comportent notamment un opérateur de masquage OPM dont on reviendra plus en détail ci-après sur la fonctionnalité.

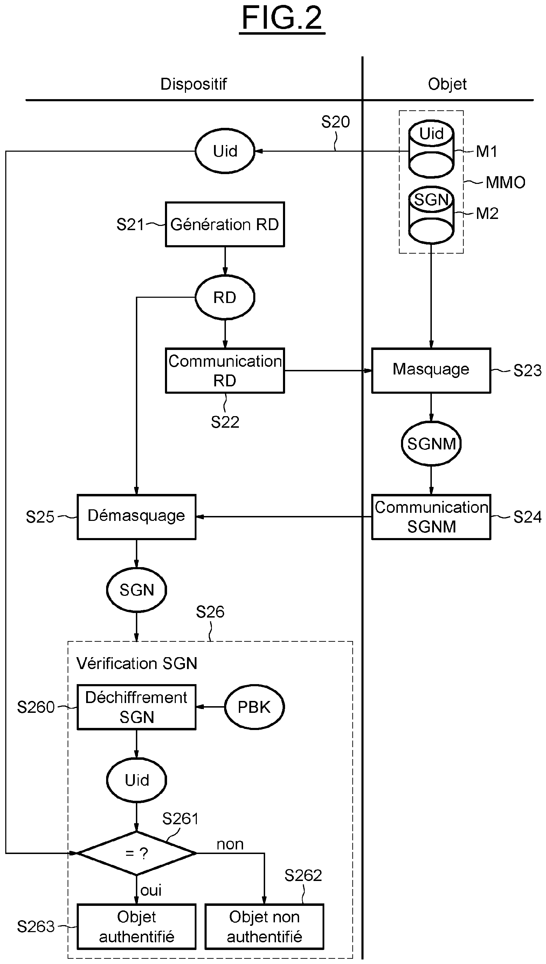

On se réfère maintenant plus particulièrement à la figure 2 pour illustrer un mode de mise en œuvre d'un procédé d'authentification de l'objet TG par le dispositif authentificateur DIS.

Les moyens de mémoire MMO de l'objet comportent une première mémoire M1 stockant un identifiant-objet Uid et une deuxième mémoire M2, par exemple mais non nécessairement une mémoire protégée, stockant une signature SGN associée à l'objet.

On reviendra plus en détail ci-après sur l'élaboration de cette signature.

Cela étant, on peut d'ores et déjà dire que la signature SGN est reliée à l'identifiant-objet Uid.

Lors d'une identification, l'identifiant-objet Uid est transmis par l'objet au dispositif (étape S20) qui stocke cet identifiant-objet dans un registre par exemple.

Le générateur GEN du dispositif génère alors dans une étape S21 une indication RD associée à l'objet, qui est en l'espèce un nombre pseudo-aléatoire RD.

Cette indication RD est communiquée (étape S22) par le dispositif à l'objet.

L'opérateur de masquage OPM des moyens de traitement-objet effectue alors un masquage de la signature SGN en utilisant l'indication RD, de façon à fournir une signature masquée SGNM.

Cette signature masquée SGNM est communiquée (étape S24) aux moyens de traitement-dispositif.

L'opérateur de démasquage OPDM, associé à l'opérateur de masquage OPM effectue alors un démasquage de la signature masquée SGNM en utilisant ladite indication RD, de façon à obtenir la signature SGN.

Les moyens de vérification MVRF vont ensuite vérifier (étape S26) la signature SGN qui a été démasquée.

A cet égard, comme on le verra plus en détail ci-après, une façon d'obtenir la signature SGN utilise un chiffrement de l'identifiant Uid avec une clé privée d'un algorithme de chiffrement/déchiffrement asymétrique, par exemple mais non limitativement un algorithme du type RSA.

Les moyens de traitement-dispositif MTD déchiffrent donc la signature SGN à l'aide de la clé publique PBK associée à la clé privée.

Ce déchiffrement permet d'obtenir l'identifiant-objet Uid qui est comparé par le comparateur CMP dans une étape S261 à l'identifiant-objet Uid stocké dans le registre et qui avait été communiqué dans l'étape S20 par l'objet.

Si les deux identifiants-objet coïncident, alors l'objet est considéré comme ayant été authentifié (étape S263). Dans le cas contraire, l'objet est non authentifié (S262).

L'opérateur de masquage OPM et l'opérateur de démasquage associé pourraient être un algorithme de chiffrement/déchiffrement symétrique, par exemple un algorithme du type AES ou DES.

En variante, l'opérateur de masquage peut être configuré pour effectuer un embrouillage (« scrambling ») des bits de la signature SGN avec les bits du nombre pseudo-aléatoire RD selon une règle d'embrouillage prédéfinie. Dans ce cas, l'opérateur de démasquage pourrait être un opérateur inverse de l'opérateur d'embrouillage configuré pour effectuer un désembrouillage (« descrambling ») de la signature masquée SGNM avec le nombre pseudo-aléatoire RD selon la même règle de désembrouillage que la règle d'embrouillage utilisée.

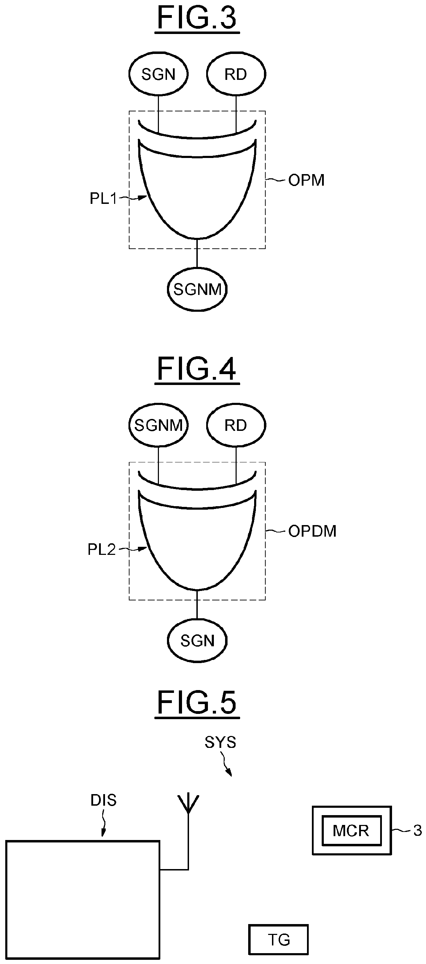

Cela étant, une façon particulièrement simple et peu coûteuse d'effectuer le masquage S23 et le démasquage S25 de la figure 2 consiste à utiliser comme opérateur de masquage OPM une porte logique OU EXCLUSIF PL1 (figure 3) recevant sur une entrée la signature SGN et sur l'autre entrée le nombre pseudo-aléatoire RD et fournissant en sortie la signature masquée SGNM.

Dans ce cas, comme illustré sur la figure 4, l'opérateur de démasquage OPDM comprend une porte logique PL2 OU EXCLUSIF recevant sur une de ses entrées la signature masquée SGNM et sur l'autre entrée le nom pseudo-aléatoire RD. La sortie de la porte logique PL2 fournit la signature SGN.

Comme illustré sur la figure 5, le système SYS peut comporter en outre une entité tierce 3 par exemple un gestionnaire de transpondeurs, comportant des moyens de chiffrement MCR utilisant l'algorithme de chiffrement/déchiffrement asymétrique mentionné ci-avant, par exemple l'algorithme de type RSA.

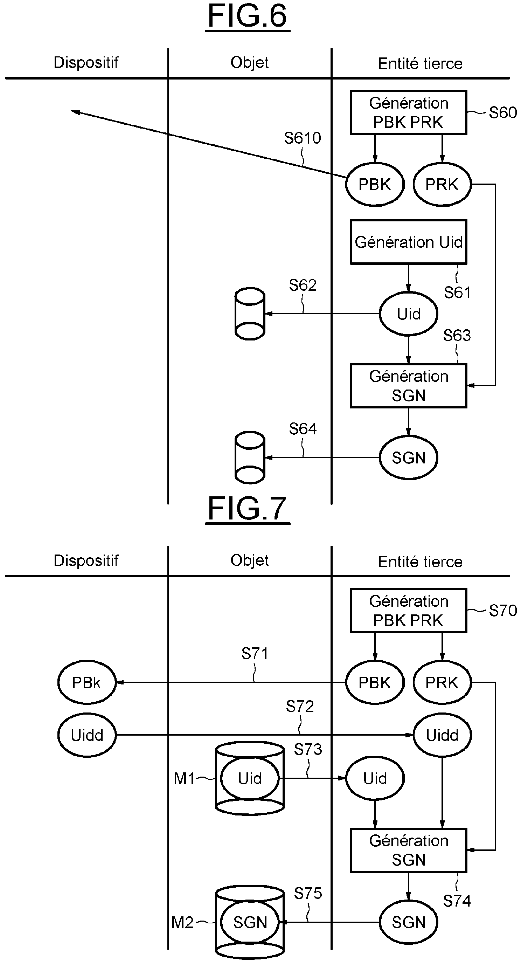

Comme illustré sur la figure 6, l'entité tierce génère, par exemple lors de la fabrication de l'objet, une paire de clés publique et privé associées, respectivement référencées PBK et PRK (étape S60). Ces deux clés sont associées à l'algorithme de chiffrement/déchiffrement asymétrique et sont également associées de façon biunivoque à l'identifiant-objet Uid qui est généré dans l'étape S61.

La clé publique PBK est mise à disposition du dispositif (étape S610). A cet égard, la clé peut être communiquée directement au dispositif pour y être stockée ou bien elle peut être stockée dans le « cloud » pour être accessible par le dispositif lorsque celui-ci aura connaissance de l'identifiant-objet Uid.

En variante, le dispositif peut également stocker en mémoire tout un ensemble de clés publiques PBK respectivement associées à un ensemble d'identifiants-objets différents.

Les moyens de chiffrement MCR de l'entité tierce 3 génèrent alors (étape S63) la signature SGN en chiffrant l'identifiant-objet Uid avec la clé privée PRK.

L'identifiant-objet Uid est alors stocké (étape S62) dans la mémoire M1 de l'objet tandis que la signature SGN est stockée (étape S64) dans la mémoire M2.

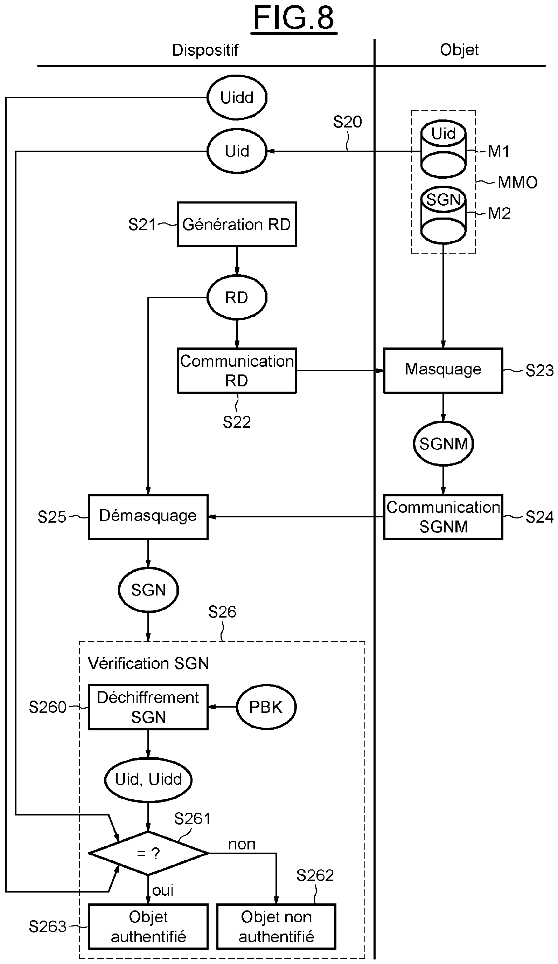

On se réfère maintenant plus particulièrement aux figures 7 et 8 pour illustrer une application de l'invention à l'adjonction de la gestion de fonctionnalités du dispositif par une entité tierce, typiquement un contrôleur privé. Ainsi, par exemple, on peut envisager qu'un téléphone mobile intelligent (smart-phone) ait accès à un certain nombre d'applications pour autant qu'un transpondeur authentifié soit en communication sans contact avec le smart-phone.

A contrario, si le transpondeur n'est pas authentifié, le téléphone n'aura accès qu'à des applications restreintes.

Le transpondeur peut être par exemple incorporé dans une montre située au poignet de l'utilisateur du téléphone mobile.

A cet égard, comme illustré sur la figure 7, l'entité tierce génère (étape S70) la paire de clés publique PBK et privée PRK et met à la disposition (étape S71) du dispositif la clé publique PBK.

Par contre, la signature SGN est générée (étape S74) non seulement à partir de l'identifiant-objet Uid qui est communiqué à l'entité tierce (étape S73) mais également à partir de l'identifiant-dispositif Uidd qui est communiqué (étape S72) par le dispositif à l'entité tierce.

La signature SGN ainsi obtenue est stockée (étape S75) dans la mémoire M2 de l'objet.

L'authentification de l'objet par le dispositif est illustrée sur la figure 8 qui diffère simplement de la figure 2 par le fait que dans l'étape de déchiffrement S260, le déchiffrement de la signature SGN à l'aide de la clé publique PBK fournit l'identifiant-objet Uid et l'identifiant-dispositif Uidd. Et, la comparaison S261 s'effectue également en utilisant l'identifiant-dispositif Uidd. Là encore, si les deux identifiants Uid et Uidd obtenus par le déchiffrement S260 correspondent aux deux identifiants Uidd stocké dans le dispositif et Uid fourni par l'objet, alors l'objet est considéré comme authentifié (S263) ce qui donne un accès total aux applications pour le dispositif DIS.

Dans le cas contraire, l'objet est non authentifié et le dispositif n'a qu'un accès restreint à certaines fonctionnalités.

Les échanges entre l'objet et le dispositif pour l'élaboration de l'information de personnalisation SGNM et sa communication sont par exemple effectués par des messages ayant un format conforme à la spécification NFC data exchange format (NDEF) décrite par exemple dans le document « NFC Forum NDEF 1.0 NFCForum-TS-NDEF_1.0 2006-07-24 » auquel l'homme du métier pourra se référer à toutes fins utiles.

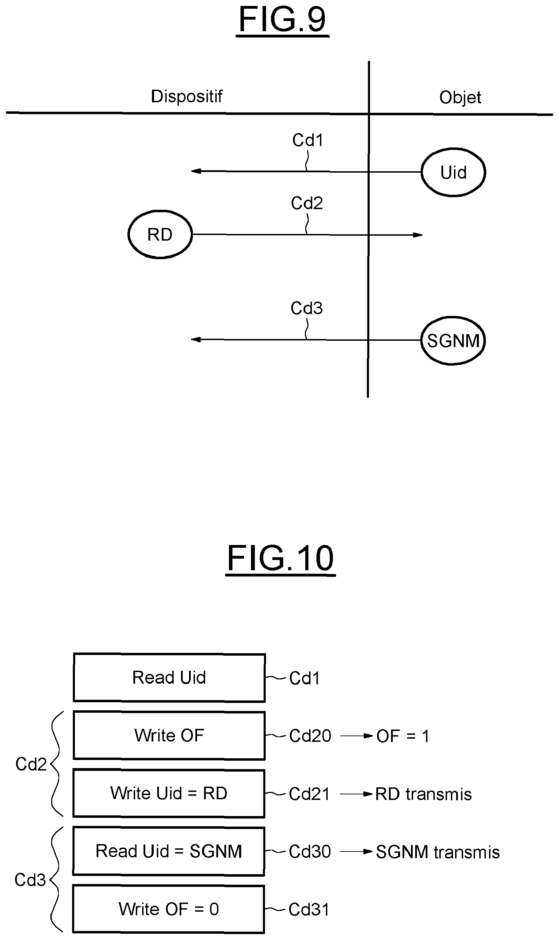

Plus précisément, comme illustré sur la figure 9, la communication de l'identifiant-objet Uid s'effectue par une commande Cd1.

La transmission de l'indication RD à l'objet s'effectue par une commande Cd2 et la transmission de l'information de personnalisation, c'est-à-dire la signature masquée SGNM s'effectue par une commande Cd3.

Comme illustré sur la figure 10, de façon à ne pas créer de commande spécifique, ces commandes Cd1-Cd3 comprennent des commandes d'écriture et de lecture de l'identifiant-objet Uid dans lesquelles les contenus des champs dédiés à l'identifiant-objet sont, pour certaines de ces commandes, modifiés pour contenir ladite indication RD ou ladite information de personnalisation SGNM.

Cela étant, afin que ces modifications soient prises en compte par l'objet, on utilise un paramètre OF dont la valeur va permettre la prise en compte ou non de ces modifications.

Plus précisément, la commande Cd1 est une commande classique de lecture « Read Uid ».

La commande Cd2 comporte deux commandes d'écriture. Une première commande d'écriture Cd20, « Write OF », permet de fixer la valeur du paramètre OF à 1 (par exemple) et de stocker cette valeur dans un registre temporaire de l'objet.

La commande Cd2 comporte alors une deuxième commande d'écriture Cd21, « Write Uid », dans laquelle le champ Uid contient l'indication RD.

Ainsi, lorsque l'objet reçoit cette commande Cd21 et que le paramètre OF est à 1, les moyens de traitement-objet savent que le champ de cette commande Cd21 contient l'indication RD.

De même, la commande Cd3 comporte une première commande de lecture Cd30 suivie d'une commande d'écriture Cd31.

La commande de lecture est une commande de lecture de l'identifiant-objet dans laquelle le contenu du champ d'identifiant a été modifié pour contenir l'indication de personnalisation SGNM. Le paramètre OF ayant la valeur 1, les moyens de traitement-objet savent qu'ils doivent placer dans le champ de cette commande de lecture la valeur de la signature masquée SGNM.

Enfin, les moyens de traitement-dispositif envoient une commande d'écriture Cd31 « Write OF = 0 » ce qui permet d'effacer la valeur du paramètre OF et de le remettre dans son état initial ayant la valeur logique 0 (par exemple).

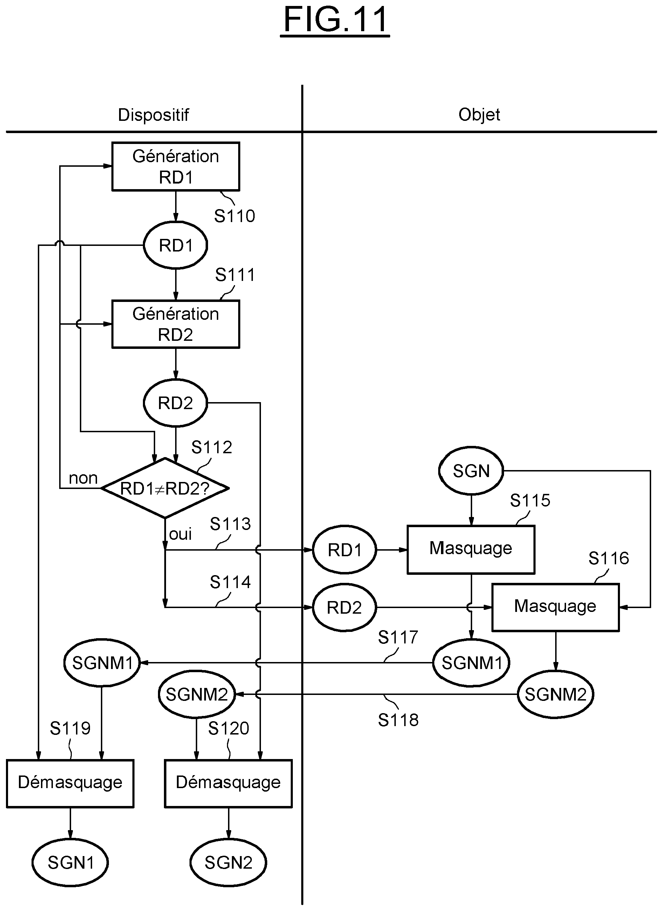

On se réfère maintenant plus particulièrement aux figures 11 à 13 pour décrire une variante de l'invention utilisant une redondance de personnalisation la signature stockée SGN lors de l'authentification de l'objet par le dispositif.

Plus précisément comme illustré sur la figure 11, les moyens de traitement-dispositif génèrent (étapes S110 et S111) deux nombres pseudo-aléatoires ou aléatoires RD1, RD2 faisant office de deux indications.

Bien que la probabilité d'obtenir deux nombres RD1, RD2 égaux soit très faible, les moyens de traitement-dispositif vérifient dans l'étape S112 la non égalité des nombres RD1 et RD2. Dans le cas contraire les moyens de traitement-dispositif génèrent de nouveau au moins l'un des deux nombres.

Puis les indications RD1, RD2 sont transmises à l'objet (étapes S113 et S114).

Les moyens de traitement-objet procèdent ensuite à l'aide de l'opérateur de masquage à un masquage S115 de la signature SGN avec l'indication RD1 et à un masquage S116 de la signature SGN avec l'indication RD2 de façon à obtenir deux signatures masquées SGNM1 et SGNM2.

Ces deux signatures masquées SGNM1 et SGNM2 sont ensuite transmises (étapes S117 et S118) au dispositif où les moyens de traitement-dispositif effectuent à l'aide de l'opérateur de démasquage un démasquage de la signature masquée SGNM1 et un démasquage de la signature masquée SGNM2 de façon à obtenir deux signatures SGN1 et SGN2 qui sont censées être identiques et égales à la signature SGN.Bien entendu l'ordre des étapes de la figure 11 peut être modifié.

Ainsi on pourrait par exemple effectuer l'étape S113 avant l'étape S111, ou encore effectuer d'abord la séquence des étapes S110, S113, S115, S117, S119 puis la séquence des étapes S111, S112 (en cas d'égalité on génère à nouveau une indication RD2), S114, S116, S118, S120.

Deux solutions peuvent être ensuite envisagées pour poursuivre l'authentification.

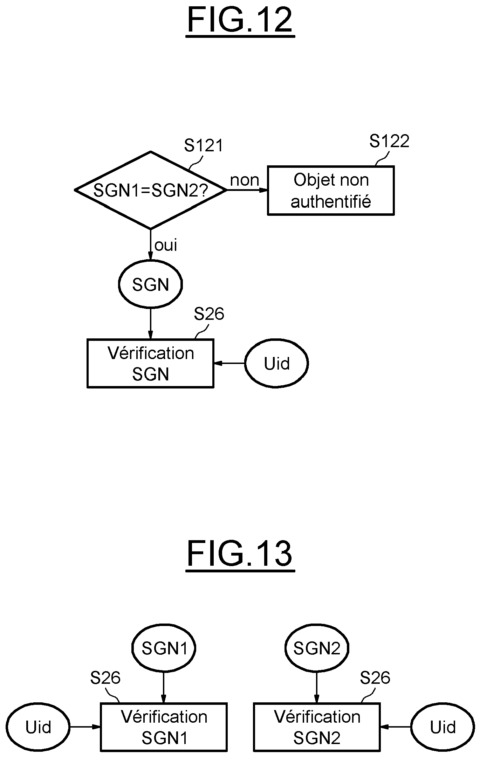

Une première solution, illustrée sur la figure 12, prévoit une pré-vérification S121 de l'égalité des signatures démasquées.

En cas de non égalité, l'objet est déclaré non authentifié (S122).

En cas d'égalité les moyens de traitement-dispositif procède à la vérification de la signature SGN en prenant l'une quelconque des signatures démasquées SGN1 ou SGN2, cette vérification S26 étant par exemple celle déjà été décrite sur la figure 2. Une deuxième solution, illustrée sur la figure 13, prévoit d'effectuer pour chaque signature démasquée SGN1, SGN2, une vérification S26 conforme par exemple à celle décrite à la figure 2.

Si l'une des vérifications échoue (est négative), l'objet est déclaré non authentifié.

Si toutes les vérifications aboutissent chacune à un objet authentifié, alors l'objet est déclaré authentifié.

## Revendications

1. Procédé d'authentification d'un objet par un dispositif, ledit objet stockant une signature (SGN) associée audit objet, le procédé comprenant une élaboration (S23) dans ledit objet d'au moins une information de personnalisation (SGNM) de l'objet au moins à partir de ladite signature stockée (SGN) et d'au moins une indication (RD) associée audit objet et communiquée sans contact (S22) par le dispositif audit objet lors de l'authentification, une communication sans contact (S24) audit dispositif de ladite au moins une information de personnalisation (SGNM), au moins une détermination (S25) par le dispositif de ladite signature (SGN) à partir de ladite au moins information de personnalisation (SGNM) et de ladite au moins une indication (RD), et au moins une vérification (S26) de ladite signature (SGN) par le dispositif.

2. Procédé selon la revendication 1,
dans lequel ledit objet est un objet NFC et ledit dispositif comprend au moins une fonctionnalité NFC,
dans lequel ladite signature stockée (SGN) résulte d'un chiffrement d'au moins un identifiant-objet (Uid) de l'objet avec une clé privée (PRK) d'un algorithme de chiffrement/déchiffrement asymétrique, et ladite au moins une vérification de ladite signature comprend un déchiffrement par ledit dispositif dudit au moins un identifiant-objet chiffré, à l'aide de la clé publique (PBK) dudit algorithme de chiffrement/déchiffrement et une comparaison du résultat du déchiffrement avec ledit au moins un identifiant-objet ayant été communiqué au dispositif par ledit objet,
et dans lequel la communication sans contact de ladite au moins une indication (RD) par le dispositif audit objet et la communication sans contact de ladite au moins une information de personnalisation (SGNM) par l'objet au dispositif comprennent des commandes d'écriture et/ou de lecture de l'identifiant-objet (Cd2, Cd3) dans lesquelles les contenus des champs dédiés à l'identifiant-objet (Uid) sont modifiés pour contenir respectivement ladite au moins une indication (RD) ou ladite au moins une information de personnalisation (SGNM), la prise en compte de ces modifications par l'objet étant conditionnée à une valeur choisie d'un paramètre (OF) fixée par le dispositif.

3. Procédé selon la revendication 2,
dans lequel la communication de l'identifiant-objet (Uid) au dispositif s'effectue par une première commande de lecture de l'identifiant-objet (Cd1), la transmission de ladite indication (RD) à l'objet s'effectue par une deuxième commande (Cd2) et la transmission de l'information de personnalisation au dispositif (SGNM) s'effectue par une troisième commande (Cd3),
dans lequel la deuxième commande (Cd2) comporte :
- une première commande d'écriture (Cd20) permettant de fixer la valeur du paramètre (OF) à ladite valeur choisie et de stocker cette valeur choisie dans des moyens de mémoire de l'objet, et
- une deuxième commande d'écriture de l'identifiant-objet (Cd21) dans laquelle le champ dédié à l'identifiant-objet (Uid) contient ladite indication (RD),
dans lequel la troisième commande (Cd3) comporte :
- une première commande de lecture de l'identifiant-objet (Cd30) dans laquelle le contenu du champ dédié à l'identifiant-objet a été modifié pour contenir l'indication de personnalisation (SGNM), et
- une deuxième commande d'écriture (Cd31) permettant d'effacer la valeur choisie du paramètre (OF) et de le remettre dans son état initial.

4. Procédé selon l'une des revendications précédentes, dans lequel ladite au moins une indication (RD) est générée (S21) par le dispositif lors de l'authentification.

5. Procédé selon la revendication 4, dans lequel la génération (S21) de ladite au moins une indication comprend une génération d'au moins un aléa (RD).

6. Procédé selon l'une des revendications précédentes, comprenant une élaboration (S23) dans ledit objet de plusieurs informations de personnalisation (SGNM) de l'objet à partir de ladite signature stockée (SGN) et de plusieurs indications différentes (RDi) associées audit objet et communiquées sans contact (S22) par le dispositif audit objet lors de l'authentification, une communication sans contact (S24) audit dispositif desdites plusieurs informations de personnalisation (SGNM), et plusieurs déterminations (S25) par le dispositif de ladite signature (SGN) à partir respectivement desdites plusieurs informations de personnalisation (SGNM) et desdites indications correspondantes (RD).

7. Procédé selon la revendication 6, dans lequel ladite au moins une vérification (S26) de ladite signature (SGN) par le dispositif comprend une pré-vérification de l'égalité desdites signatures déterminées, et en cas d'égalité, une vérification de l'une des signatures déterminées.

8. Procédé selon la revendication 6, dans lequel ladite au moins une vérification (S26) de ladite signature (SGN) par le dispositif comprend une vérification de chacune des signatures déterminées.

9. Procédé selon l'une des revendications précédentes, dans lequel l'élaboration de ladite au moins une information de personnalisation comprend au moins un masquage (S23) de ladite signature à l'aide d'un opérateur de masquage (OPM) utilisant ladite au moins une indication (RD) et ladite au moins une détermination par le dispositif de ladite signature comprend au moins un démasquage (S25) de ladite au moins une signature masquée, à l'aide de l'opérateur de démasquage (OPDM) associé audit opérateur de masquage et de ladite au moins une indication.

10. Système, comprenant un objet et un dispositif capables de dialoguer mutuellement sans contact, ledit objet (TG) comportant des moyens de mémoire (MMO) configurés pour stocker une signature (SGN) associée audit objet, ledit dispositif (DIS) comportant des moyens de traitement-dispositif (MTD) configurés pour communiquer audit objet au moins une indication (RD) associée audit objet lors d'une authentification de l'objet par le dispositif, ledit objet comportant des moyens de traitement-objet (MTO) configurés pour élaborer au moins une information de personnalisation (SGNM) de l'objet au moins à partir de ladite signature stockée (SGN) et de ladite au moins une indication (RD) et délivrer ladite au moins une information de personnalisation audit dispositif, les moyens de traitement-dispositif (MTD) étant en outre configurés pour effectuer au moins une détermination de ladite signature à partir de ladite au moins une information de personnalisation et de ladite au moins une indication et effectuer au moins une vérification de ladite signature.

11. Système selon la revendication 10,
dans lequel ledit objet est un objet NFC et ledit dispositif comprend au moins une fonctionnalité NFC,
dans lequel ladite signature stockée résulte d'un chiffrement d'au moins un identifiant-objet de l'objet avec une clé privée d'un algorithme de chiffrement/déchiffrement asymétrique, les moyens de traitement-objet (MTO) sont configurés pour communiquer au dispositif ledit au moins un identifiant-objet et les moyens de traitement-dispositif (MTD) comprennent des moyens de vérification de ladite signature comportant ledit algorithme de chiffrement/déchiffrement apte à effectuer un déchiffrement dudit au moins un identifiant-objet encrypté, à l'aide de ladite clé publique et des moyens de comparaison, aptes à effectuer une comparaison du résultat du déchiffrement avec ledit au moins un identifiant-objet ayant été communiqué au dispositif par ledit objet,
et dans lequel les moyens de mémoire de l'objet sont en outre configurés pour stocker un paramètre (OF), les moyens de traitement-dispositif (MTD) sont configurés pour élaborer des commandes d'écriture et/ou de lecture de l'identifiant-objet dans lesquelles les contenus des champs dédiés à l'identifiant-objet sont modifiés pour contenir respectivement ladite au moins une indication (RD) ou ladite au moins une information de personnalisation (SGNM), et pour fixer la valeur dudit paramètre (OF) à une valeur choisie, et les moyens de traitement-objet (MTD) sont configurés pour prendre en compte les modifications des contenus desdits champs lorsque la valeur dudit paramètre a la valeur choisie.

12. Système selon la revendication 11, dans lequel dans lequel les moyens de traitement-dispositif (MTD) sont configurés pour délivrer à l'objet une première commande de lecture de l'identifiant-objet (Cd1) de façon à permettre la communication de l'identifiant-objet (Uid) au dispositif, pour délivrer à l'objet une deuxième commande (Cd2) de façon à permettre la transmission de ladite indication (RD) à l'objet et pour délivrer à l'objet une troisième commande (Cd3) de façon à permettre la transmission de l'information de personnalisation au dispositif (SGNM),
dans lequel la deuxième commande (Cd2) comporte :
- une première commande d'écriture (Cd20) permettant de fixer la valeur du paramètre (OF) à ladite valeur choisie et de stocker cette valeur choisie dans les moyens de mémoire de l'objet, et
- une deuxième commande d'écriture de l'identifiant-objet (Cd21) dans laquelle le champ dédié à l'identifiant-objet (Uid) contient ladite indication (RD),
dans lequel la troisième commande (Cd3) comporte :
- une première commande de lecture de l'identifiant-objet (Cd30) dans laquelle le contenu du champ dédié à l'identifiant-objet a été modifié pour contenir l'indication de personnalisation (SGNM), et
- une deuxième commande d'écriture (Cd31) permettant d'effacer la valeur choisie du paramètre (OF) et de le remettre dans son état initial.

13. Système selon l'une des revendications 10 à 12, dans lequel les moyens de traitement-dispositif (MTD) comprennent un générateur (GEN) configuré pour générer ladite au moins une indication lors de l'authentification.

14. Système selon la revendication 13, dans lequel le générateur (GEN) comprend un générateur de nombres aléatoires ou pseudo-aléatoires, ladite au moins une indication comportant un nombre aléatoire ou pseudo-aléatoire.

15. Système selon l'une des revendications 10 à 14, dans lequel les moyens de traitement-dispositif (MTD) sont configurés pour communiquer audit objet plusieurs indications différentes (RD) associées audit objet lors d'une authentification de l'objet par le dispositif, les moyens de traitement-objet sont configurés pour élaborer (S23) plusieurs informations de personnalisation (SGNM) de l'objet à partir de ladite signature stockée (SGN) et desdites plusieurs indications différentes (RDi) et délivrer (S24) ces informations de personnalisation audit dispositif, les moyens de traitement-dispositif (MTD) étant en outre configurés pour effectuer plusieurs déterminations (S25) de ladite signature (SGN) à partir respectivement desdites plusieurs informations de personnalisation (SGNM) et desdites indications correspondantes (RD).

16. Système selon la revendication 15, dans lequel les moyens de traitement-dispositif sont configurés pour effectuer une pré-vérification de l'égalité desdites signatures déterminées, et en cas d'égalité, une vérification de l'une des signatures déterminées.

17. Système selon la revendication 15, dans lequel les moyens de traitement-dispositif sont configurés pour effectuer une vérification de chacune des signatures déterminées.

18. Système selon l'une des revendications 10 à 17, dans lequel les moyens de traitement-objet (MTO) comprennent un opérateur de masquage (OPM) configuré pour effectuer au moins un masquage de ladite signature en utilisant ladite au moins une indication de façon à élaborer ladite au moins une information de personnalisation et les moyens de traitement-dispositif (MTD) comprennent un opérateur de démasquage (OPDM) associé audit opérateur de masquage configuré pour effectuer au moins un démasquage de ladite signature masquée, à l'aide de ladite au moins une indication de façon à effectuer au moins une détermination de ladite signature.

19. Dispositif appartenant au système selon l'une des revendications 10 à 18.

20. Objet appartenant au système selon l'une des revendications 10 à 18.

21. Objet capable de dialoguer sans contact avec un dispositif, comprenant des moyens de mémoire (MMO) configurés pour stocker une signature associée audit objet, des moyens de traitement-objet (MTO) configurés pour élaborer au moins une information de personnalisation de l'objet au moins à partir de ladite signature stockée et d'au moins une indication associée audit objet communiquée par le dispositif audit objet lors d'une authentification de l'objet par le dispositif, et délivrer ladite au moins une information de personnalisation au dispositif.

22. Objet selon la revendication 21, dans lequel l'objet est un objet NFC dans lequel ladite signature stockée (SGN) résulte d'un chiffrement d'au moins un identifiant-objet (Uid) de l'objet avec une clé privée d'un algorithme de chiffrement/déchiffrement asymétrique, et les moyens de traitement-objet (MTO) sont configurés pour communiquer au dispositif ledit au moins un identifiant-objet (Uid) et dans lequel les moyens de mémoire sont en outre configurés pour stocker un paramètre (OF), les moyens de traitement-objet sont configurés pour recevoir des commandes d'écriture et/ou de lecture de l'identifiant-objet dans lesquelles les contenus des champs dédiés à l'identifiant-objet sont modifiés pour contenir respectivement ladite au moins une indication ou ladite au moins une information de personnalisation, et pour prendre en compte les modifications des contenus desdits champs lorsque la valeur dudit paramètre (OF) a une valeur choisie

23. Objet selon la revendication 21 ou 22, dans lequel les moyens de traitement-objet (MTO) comprennent un opérateur de masquage (OPM) configuré pour effectuer au moins un masquage de ladite signature en utilisant ladite au moins une indication de façon à élaborer ladite au moins une information de personnalisation.

24. Objet selon l'une des revendications 21 à 23, dans lequel ledit objet est un transpondeur.

25. Objet selon l'une des revendications 21 à 24, dans lequel ledit objet est un objet NFC.
